# EUROPEAN PATENT APPLICATION

(11) **EP 2 626 581 A1**
(43) Date of publication of application: **14.08.2013**
(21) Application number: 11830797.4
(22) Date of filing: 11.10.2011
(51) Int. Cl.: F16D 11/04, B60N 2/44, F16D 11/08, F16D 11/10

(54) **POWER TRANSMISSION MECHANISM AND MULTI-SHAFT DRIVE DEVICE**

(30) Priority: 08.10.2010 JP 2010228614
(71) Applicant: NHK Spring Co.,Ltd., Yokohama-shi Kanagawa 236-0004 (JP)
(72) Inventor: SHIGEMATSU, Ryohei, Yokohama-shi Kanagawa 236-0004 (JP); MURAKAMI, Kenji, Yokohama-shi Kanagawa 236-0004 (JP); NAKAJIMA, Kiyoshi, Yokohama-shi Kanagawa 236-0004 (JP); HIRATA, Takafumi, Yokohama-shi Kanagawa 236-0004 (JP); FUJII, Takahiro, Yokohama-shi Kanagawa 236-0004 (JP); IINO, Shinji, Yokohama-shi Kanagawa 236-0004 (JP)
(74) Representative: Eisenführ, Speiser & Partner
(86) International application number: PCT/JP2011/073351
(87) International publication number: WO 2012/046868

(57) **Abstract**

Force of used spring can be weak, wear amount of power transmission member (gear or the like) can be reduced, and generation of strange noises can inhibited.

When the dial cam 50 is rotated and the recess 51 of the outer peripheral surface 52 faces the front end portion 32a of the pin 32 of the connection shaft 31, the connection shaft 31, which is biased by the force of the coil spring 40, is connected to the bevel gear 35, which engages with the bevel gear 14 and is rotated, via the clutch teeth 33 and 36. Thus, the connection shaft 31 is rotated, and the output shaft 20 is rotated together with the connection shaft 31. That is, the power of the motor 10 is transmitted to the output shaft 20. Since the coil spring 40 is used for connecting the connection shaft 31 to the bevel gear 35, the force of the coil spring 40 can be reduced.

## Description

### Technical Field

The present invention relates to a power transmission mechanism which transmits or does not transmit power to a output side transmission member (output shaft or the like), and relates to a multiple-shaft drive device using the power transmission mechanism.

### Background Art

In seats for vehicles, there are many features having parts for which plural positions can be adjusted (for example, front-back direction slide of entire seat, up-and-down motion of seating face height, or reclining of seatback (backrest) can be adjusted) in accordance with body type or position of an occupant. The adjustments of these movable parts have been manually performed, but electrical seats, which are adjusted by motor drive, are provided as more useful seats.

In order to drive plural movable parts independently, an electrical seat is thought of as having a structure in which one motor is connected to each of output shafts connected to the movable parts. However, the number of motors is increased. Therefore, it would be efficient to drive plural output shafts by one motor. In order to realize this, it is known that motor power is transmitted to each output shaft, which is connected to plural movable parts, via a clutch, and the clutch is connected or disconnected and each movable part is selectively driven (see Patent Document 1).

Patent Document 1 is Japanese Unexamined Patent Application Publication No. H6-156123.

### DISCLOSURE OF THE INVENTION

### PROBLEMS SOLVED BY THE INVENTION

In this type of power transmission mechanism, as shown in the above conventional one, a structure is used in which power is transmitted by using engagement of gears biased by biasing members (springs or the like). However, in this structure, strong biasing force is required, so that problems (wear of gears and generation of strange noises in engagement parts) may occur.

The present invention was made in consideration of the above cases. An object of the present invention is to provide a power transmission mechanism, which can reduce wear amount of a power transmission member (gear or the like) and can inhibit generation of strange noises, and a multiple-shaft drive device using the power transmission mechanism.

### MEANS FOR SOLVING THE PROBLEMS

According to one aspect (claim 1) of the present invention, a power transmission mechanism includes: an output side transmission member; an output side transmission member support portion which supports the output side transmission member in a condition in which the output side transmission member is rotatable and is restricted in axial direction movement; an input side transmission member which is disposed so as to be apart from the output side transmission member in axial direction of the output side transmission member; an input side transmission member support portion which supports the input side transmission member in a condition in which the input side transmission member is rotatable and is restricted in axial direction movement, and which holds a condition in which the input side transmission member is constantly connected to an input member; a connection member which is provided between the output side transmission member and the input side transmission member so as to be movable between two positions, which are a clutch connection position and a clutch disconnection position, in the axial direction; a biasing member which biases the connection member; and a transmission means which transmits rotation of the input side transmission member to the output side transmission member via the connection member when the connection member is positioned at the clutch connection position.

In the multiple-shaft drive device, the input side transmission member is held by the input side transmission member support portion so as to be restricted in axial direction movement and be constantly connected to the input member, and the biasing member is used for connecting the connection member to the input side transmission member. Thus, the biasing force of the biasing member can be relatively weak. As a result, wear amount can be reduced, and generation of strange noises can be inhibited.

According to one desirable embodiment (second aspect, claim 2) of the present invention, the input member and the input side transmission member may have bevel gears which engage with each other.

According to another desirable embodiment (third aspect, claim 3) of the present invention, the clutch connection position of the connection member may be a predetermined position shifted toward the input side transmission member, and the transmission means may be a link means and a connection means, the link means being rotatable together with the output side transmission member of the connection member and movable in an axial direction, the connection means being provided at connection portions of the connection member and the input side transmission member.

According to another desirable embodiment (fourth aspect, claim 4) of the present invention, the clutch connection position of the connection member may be a predetermined position shifted toward the output side transmission member, and the transmission means may be a link means and a connection means, the link means being rotatable together with the input side transmission member of the connection member and movable in an axial direction, the connection means being provided at connection portions of the connection member and the output side transmission member.

According to another desirable embodiment (fifth aspect, claim 5) of the present invention, the connection means may be one of an engagement gear, a frictional plate, and a spline connection.

According to another desirable embodiment (sixth aspect, claim 5) of the present invention, the power transmission mechanism may further include: a selector member which moves the connection member in an axial direction and positions the connection member at one of two positions, which are the clutch connection position and the clutch disconnection position, in cooperation with the biasing member.

According to another aspect of the present invention, a multiple-shaft drive device, which transmits power of one motor selectively to plural movable mechanisms by connection or disconnection of clutch includes: a plurality of the power transmission mechanisms according to one of the first to the sixth aspects of the present invention.

### EFFECTS OF THE INVENTION

According to the present invention, the force of the used biasing means can be weak, so that wear amount can be effectively reduced, and generation of strange noises can be effectively inhibited.

### BRIEF DESCRIPTION OF DRAWINGS

Fig. 1 is a plan view showing a basic structure of a power transmission mechanism and a multiple-shaft drive device of embodiments according to the present invention.
Fig. 2 is a side surface view of the multiple-shaft drive device shown in Fig. 1.
Fig. 3 is a side surface view showing another example (frictional plate) of connection means for connecting or disconnecting a connection shaft (connection member) and a bevel gear (input side transmission member) in a power transmission mechanism.
Fig. 4 is a side surface view showing another example (frictional plate) of biasing member for biasing a connection shaft (connection member) in a direction directed to a bevel gear (input side transmission member) in a power transmission mechanism.
Fig. 5 is a perspective view showing a multiple-shaft drive device of a first embodiment according to the present invention.
Fig. 6 is a plan view of a multiple-shaft drive device of a first embodiment.
Fig. 7 is a cross sectional view taken along line VII- VII in Fig. 6.
Fig. 8 is a cross sectional view taken along line VIII- VIII in Fig. 7.
Fig. 9 is a cross sectional view showing a power transmission mechanism of a first embodiment.
Fig. 10 is a perspective view showing a multiple-shaft drive device of a second embodiment according to the present invention.
Fig. 11 is a plan view of a multiple-shaft drive device of a second embodiment.
Fig. 12 is a perspective view of a modification example of a power transmission mechanism.
Figs. 13A and 13B are cross sectional views of the power transmission mechanism shown in Fig. 12. Fig. 13A shows a clutch disconnected condition, and Fig. 13B shows a clutch connected condition.
Figs. 14A and 14B are cross sectional views of a power transmission mechanism of a third embodiment according to the present invention. Fig. 14A shows a clutch disconnected condition, and Fig. 14B shows a clutch connected condition.

### EXPLANATION OF REFERENCE NUMERALS

Reference numerals 10 denotes a motor, 13 denotes an input gear (input member), 14 denotes a bevel gear, 20 denotes an output shaft (output side transmission member), 30 denotes a power transmission mechanism, 31 denotes a connection shaft (connection member), 32a denotes a leading end portion of a pin, 33 and 36 denote clutch teeth (transmission means, connection means, engagement gear), 34 and 37 denote frictional plate (transmission means, connection means), 35 denotes a bevel gear (input side transmission member), 35b denotes an inner peripheral spline (transmission means, connection means), 38b denotes an outer peripheral spline (transmission means, connection means), 40 denotes a coil spring (biasing member), 50 denotes a dial cam (selector member), 62 denotes a gear holder portion (output side transmission member support portion, input side transmission member support portion), and 70 denotes a slide cam (selector member).

### BEST MODE FOR CARRYING OUT THE INVENTION

Embodiments of the present invention will be described with reference to the Figures hereinafter.

### [1] Basic structure

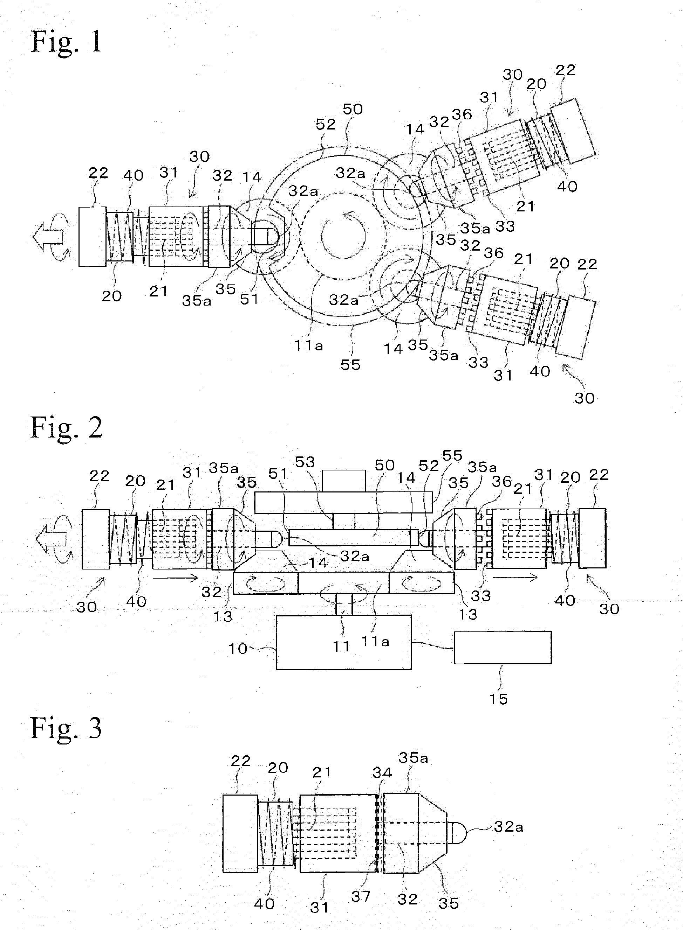

First, a basic structure of a multiple-shaft drive device according to embodiments of the present invention will be described with reference to Figs. 1 and 2. This multiple-shaft drive is desirably used for driving vehicle electrical seats.

Reference numeral 10 in Figs. 1 and 2 denotes a motor having a rotational shaft 11. The motor 10 is fixed to an apparatus frame or the like (not shown in the Figures). A switch 15 for selection of ON/OFF and normal direction/opposite direction of rotational direction of the motor 10 is connected to the motor 10.

A drive gear 11a composed of a spur gear is fixed at the rotational shaft 11. Plural (in this case, three) input gears 13 (input members) are disposed around the drive gear 11a. Each input gear 13 is a spur gear having a rotational shaft parallel to the rotational shaft 11. Bevel gears 14 are concentrically fixed on end surfaces (upper side end surfaces in Fig. 2) of the input gear 13. The power of the motor 10 is transmitted to each input gear 13, and in operation of the motor 10, each bevel gear 14 and each bevel gear 35 (described below) engaging with the bevel gear 14 are constantly rotated.

A dial cam 50 (selector member) having a circular plate shape is disposed at an upper side of the motor 10 in Fig. 2 so as to be concentric with the rotational shaft 11. The dial cam 50 is rotatably supported by the above apparatus frame or the like via a rotational shaft 53. A recess 51 is formed at a predetermined position of an outer peripheral surface 52 of the dial cam 50. Both end portions of circumferential direction side of the recess 51 are formed at slope surfaces connected to a circumferential surface. A dial 55 having a circular plate shape is concentrically provided to the dial cam 55 via the rotational shaft 53. An operator (for example, occupant in vehicle) performs rotational operation of the dial cam 50 by rotating the dial 55.

Power transmission mechanisms 30 are provided at positions corresponding to the three input gears 13 around the dial cam 50 so as to be disposed in an approximately radial manner with respect to the dial cam 50. The overall appearance of each power transmission mechanism 30 is approximately cylindrical. Each power transmission mechanism 30 has an output shaft 20 (output side transmission member), a connection shaft 31 (connection member), a bevel gear 35 (input side transmission member), and a coil spring 40 (biasing member).

The output shafts 20 have a cylindrical shape and are disposed apart from the dial cam 50. The output shafts 20 have an axial direction extending in a direction which intersects the outer peripheral surface 52 of the dial cam 50. The output shafts 20 are supported by output shaft support member of the above apparatus frame or the like so as to be rotatable and be restricted in axial direction movement. For example, an end portion of a torque cable (not shown in the Figures) is connected to a back end surface (end surface opposite to a dial cam 50 side) of each output shaft 20 so as to be rotatable together with the output shaft 20. For example, each torque cable is connected to a movable mechanism of a vehicle electrical seat, which is a mechanism which adjusts seating face height, a reclining mechanism which adjusts an angle of seat back (backrest section), a mechanism which adjusts a front-back position of seat, or the like. By rotation of the output shafts 20, the movable mechanisms are activated in accordance with rotation directions thereof.

An outer peripheral spline 21 is formed at a front end side (dial cam 50 side) of the each output shaft 20. Each outer peripheral spline 21 has many grooves and many protrusion stripes which extend in the axial direction and are formed alternately in a circumferential direction. An inner peripheral surface of the cylindrical connection shaft 31 is spline-connected to the outer peripheral spline 21. The connection shaft 31 is spline-connected to the output shaft 20, thereby being rotatable together with the output shaft 20 and slidable in the axial direction. A pin 32 is coaxially formed at a front end side of the connection shaft 31 so as to extend toward the dial cam 50. The bevel gear 35 is provided to the pin 32 so as to be relatively rotatable with respect to the pin 32 and so as not to be movable in the axial direction. The bevel gear 35 has a tooth face formed at the dial cam 50 side. The pin 32 is slidably penetrated to a center of the bevel gear 35, and the bevel gear 35 is supported by a bevel gear support portion (input side transmission member support portion) provided at the above apparatus frame or the like so as to be rotatable and be restricted in axial direction movement. In this support condition, the bevel gear 35 is held by the above bevel gear support portion such that the bevel gear 35 constantly engages with the bevel gear 14 and rotation of the bevel gear 14 is constantly transmitted to the bevel gear 35.

The bevel gear 35 has a cylindrical portion 35a at a connection shaft 31 side, and the cylindrical portion 35a has an outer diameter equal to that of the connection shaft 31. The connection shaft 31 can be moved forward and backward in the axial direction so as to be connectable with respect to the bevel gear 35. Clutch teeth 33 and 36 (connection means, engagement gears) are formed on connection surfaces of the connection shaft 31and the bevel gear 35 which are surfaces facing each other (that is, an end surface of the connection shaft 31 and an end surface of the cylindrical portion 35a of bevel gear 35). The clutch teeth 33 and 36 engage with each other so as to allow the connection shaft 31and the bevel gear 35 to be connected and rotated together with each other.

The connection shaft 31 is constantly biased in a front end direction (direction directed to the bevel gear 35) by the coil spring 40, which is in a compressed condition and is disposed between a flange portion 22 and the connection shaft 31. The flange portion 22 is formed at a back end portion of the output shaft 20. When the connection shaft 31 is moved toward the bevel gear 35 by force of the coil spring 40 and is connected to the cylindrical portion 35a of the bevel gear 35 via the clutch teeth 33 and 36, the connection shaft 31 and the bevel gear 35 are integrally connected, and the rotation of the bevel gear 35 is transmitted to the connection shaft 31.

A front end portion 32a of the pin 32 of the connection shaft 31, which is biased by the coil spring 40, faces and constantly elastically abuts the arc-like outer peripheral surface 52 of the dial cam 50. In other words, when the front end portion 32a of the pin 32 abuts the outer peripheral surface 52 of the dial cam 50, the pin 32 is pressed by the outer peripheral surface 52 of the dial cam 50 against the coil spring 40. At this time, the connection shaft 31 moves backward and is positioned at a clutch disconnection position apart from the bevel gear 35, so that the connection shaft 31 and the bevel gear 35 are in a disconnected condition.

When the dial cam 50 is rotated and the recess 51 faces the front end portion 32a of the pin 32, the pin 32 of the connection shaft 31, which was pressed by the outer peripheral surface 52 of the dial cam 50, is moved forward to the dial cam 50 by the force of the coil spring 40, and the pin 32 is positioned at a clutch connection position. At this time, the connection shaft 31 is connected to the cylindrical portion 35a of the bevel gear 35 via the clutch teeth 33 and 36, and the connection shaft 31 and the bevel gear 35 are in a connected condition. In this connected condition, the rotation of the bevel gear 35 is transmitted to the connection shaft 31, and the output shaft 20 is rotated. In this case, the spline connection of the connection shaft 31 to the output shaft 20 and the clutch teeth 33 and 36 of the connection shaft 31and the bevel gear 35 form a transmission means for transmitting the rotation of the bevel gear 35 to the output shaft 20 via the connection shaft 31.

Next, the actions of the above multiple-shaft drive device will be explained.

The power transmission mechanism 30 is in a condition in which the connection shaft 31 is biased by the coil spring 40 toward the dial cam 50. The connection shaft 31 slides with respect to the output shaft 20 in accordance with the rotation of the dial cam 50 rotated by the dial 55 such that the front end portion 32a of the pin 32 reciprocates between two positions which are a clutch disconnection position and a clutch connection position. At the clutch disconnection position, the front end portion 32a of the pin 32 abuts the arc-like outer peripheral surface 52 of the dial cam 50. At the clutch connection position, the front end portion 32a of the pin 32 enters the recess 51. In accordance with the rotation of the dial cam 50, the front end portion 32a of the pin 32, which is positioned at the clutch disconnection position, passes through the inclined surface and enters the recess 51, thereby moving to the clutch connection position. The dial cam 50 is further rotated therefrom, so that the front end portion 32a of the pin 32 passes through the inclined surface and abuts the outer peripheral surface 52 of the dial cam 50.

At the clutch disconnection position, as shown by the connection shafts 31 provided to the two output shafts 20 at the right side of Fig. 1, the outer peripheral surface 52 of the dial cam 50 presses the pin 32 against the coil spring 40, so that the connection shafts 31 moves backward to two output shafts 20. Thus, the connection shafts 31 are separated from the cylindrical portions 35a of the bevel gears 35 which engage with the bevel gears 14 and are rotated, and the connection shafts 31 and the bevel gears 35 are in a disconnected condition. In this disconnected condition, the power of the motor 10 is only transmitted to the bevel gears 35 via the bevel gears 14, and the bevel gears 35 rotates idly around the pin 32. Therefore, the output shafts 20 are not rotated, and the torque cables are not activated.

Next, the dial cam 50 is rotated by the dial 55, and the recess 51 faces the pin 32. The pin 32 at the left side of Fig. 1 is in this condition. In this case, the front end portion 32a of the pin 32 enters the recess 51 through the inclined surface, and the connection shaft 31 moves to the clutch connection position. At this time, the connection shaft 31 is connected to the cylindrical portion 35a of the bevel gear 35 via the clutch teeth 33 and 36, and the connection shaft 31 and the bevel gear 35 are in a connected condition. When the connection shaft 31 and the bevel gear 35 are connected, the rotation of the rotated bevel gear 35 is transmitted to the connection shaft 31, the output shaft 20 is rotated, and the torque cable is rotated and activated.

The actions of the multiple-shaft drive device are explained above. The dial cam 50 is rotated, and the recess 51 is faced by the pin 32 of the power transmission mechanism 30 having the output shaft 20 to be activated. Thus, this output shaft 20 can be activated, and the above respective movable mechanisms of a vehicle electrical seat are selectively driven. In the connected condition of the connection shaft 31 and the bevel gear 35, the action directions of movable mechanisms can be changed by changing the rotational direction of the motor 10 by the switch 15. Although the switch 15 may be separately provided as described above, the switch 15 is provided at the dial 55, so that steps of selection of the output shaft 20 to be activated and activation of the output shaft 20 by the activation of the motor 10 can be smoothly performed by successive operations. Thus, this case is desirable.

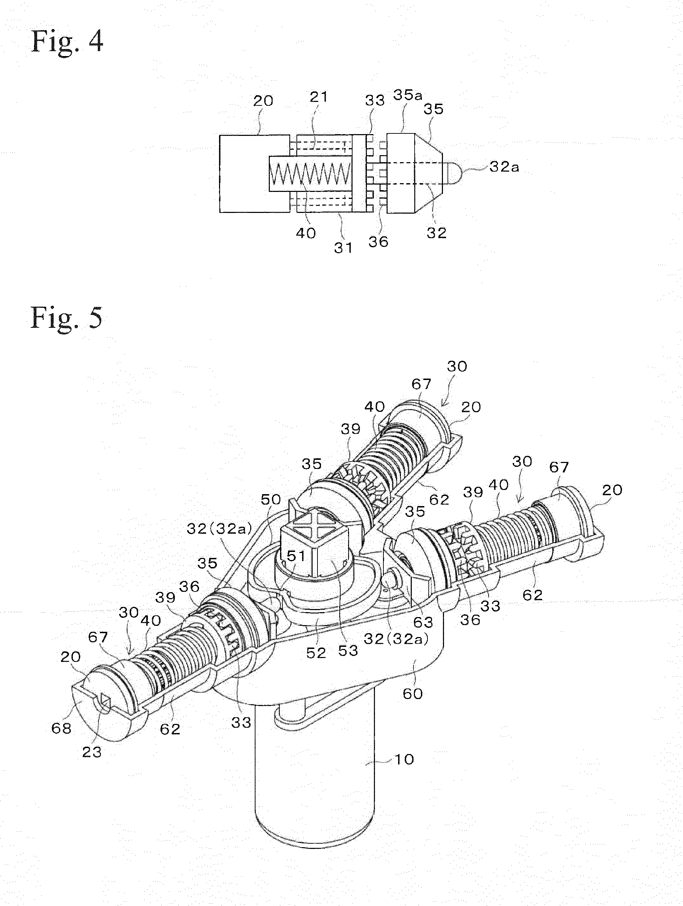

In the above embodiment, although the clutch teeth 33 and 36 are used as the connection means of the present invention, the connection means are not limited thereto. For example, as shown in Fig. 3, frictional plates 34 and 37 (surfaces formed by frictional members) may form the surfaces of the connection means. Instead of the feature in which the coil spring 40, which biases the connection shaft 31 toward dial cam 50, is provided around the output shaft 20, as shown in Fig. 4, the compressed coil spring 40 may be provided at the insides of the output shaft 20 and the connection shaft 31.

The number of the power transmission mechanisms 30 disposed around the dial cam 50 is freely selected depending on the above movable mechanisms, and the number of the recesses 51 is also freely selected. The angle and the direction of the power transmission mechanism 30 provided to face the dial cam 50 are freely selected insofar as connection and disconnection of the connection shaft 31 and the bevel gear 35 can be performed. In this manner, the angle and the direction thereof are changed, so that freedom of layout increases. In this case, for example, even in a small space, the power transmission mechanism 30 can be provided.

Next, embodiments (first to third embodiments) of the present invention, in which the above structures are specified, will be explained. In the Figures referred to in the embodiments, the same reference numerals are used for components having the same functions as those of the components shown in Figs. 1 to 4, and explanation thereof will be simplified or omitted.

### [2] First embodiment

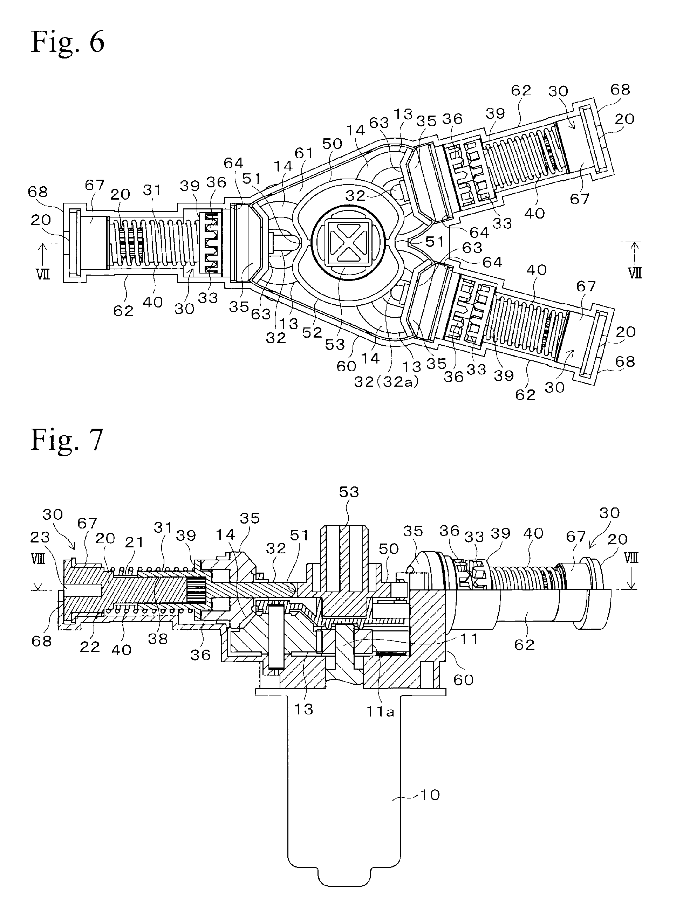

Figs. 5 to 9 show a multiple-shaft drive device of the first embodiment. Reference numeral 10 in Figs. 5 and 7 denotes a motor. As shown in Fig. 7, in this motor 10, a rotational shaft 11 extending in a vertical direction projects upward from an upper end portion of the motor 10. A case 60 having an approximately triangular shape as seen in planar view is fixed at the upper end portion of the motor 10. The case 60 opens upward, and a cover (not shown in the Figures) is provided so as to cover an opening of the case 60 and so as to be removable. A switch (not show in the Figures) for selection of ON/OFF and normal direction/opposite direction of rotational direction of the motor 10 is connected to the motor 10.

As shown in Fig. 7, the rotational shaft 11 of the motor 10 penetrates a bottom portion 61 of the case 60, and a drive gear 11a is fixed at the rotational shaft 11 projecting in the case 60. Input gears 13 engaging with the drive gear 11a are disposed at positions corresponding to respective vertexes of the triangular shape in the case 60. Bevel gears 14 are integrally formed on upper surfaces of the input gears 13

A dial cam 50 having an approximately circular plate shape is rotatably supported at a center in the case 60. An operational member (not shown in the Figures) is fixed at a center of the dial cam 50 via a rotational shaft 53 projecting upward. By operating the operational member, the dial cam 50 is rotated. For example, the operational member is a dial, a lever, or the like.

Recesses are formed at predetermined positions of an outer peripheral surface 52 of the dial cam 50. In this case, the recesses are formed at two positions, and the two positions are spaced 180 degrees from each other, the degrees being a circumferential direction angle. Both end portions of circumferential direction side of the recess 51 are formed at inclined surfaces connected to the outer peripheral surface 52.

A gear holder portion 62 (output side transmission member support portion, input side transmission member support portion) is formed at a position corresponding to each of bevel gears 14 of the case 60. Each gear holder portion 62 opens to an upper side and has a split cylindrical shape which radially extends. In each gear holder portion 62, a power transmission mechanism 30 is concentrically provided. The power transmission mechanism 30 includes an output shaft 20, a connection shaft 31, a bevel gear 35, and a coil spring 40, of which each has the same structure as that in the above embodiment. A gear holder cover portion having a split cylindrical shape is formed at the above cover so as to fit with the gear holder portion 62 of the case 60 and cover the power transmission mechanism 30.

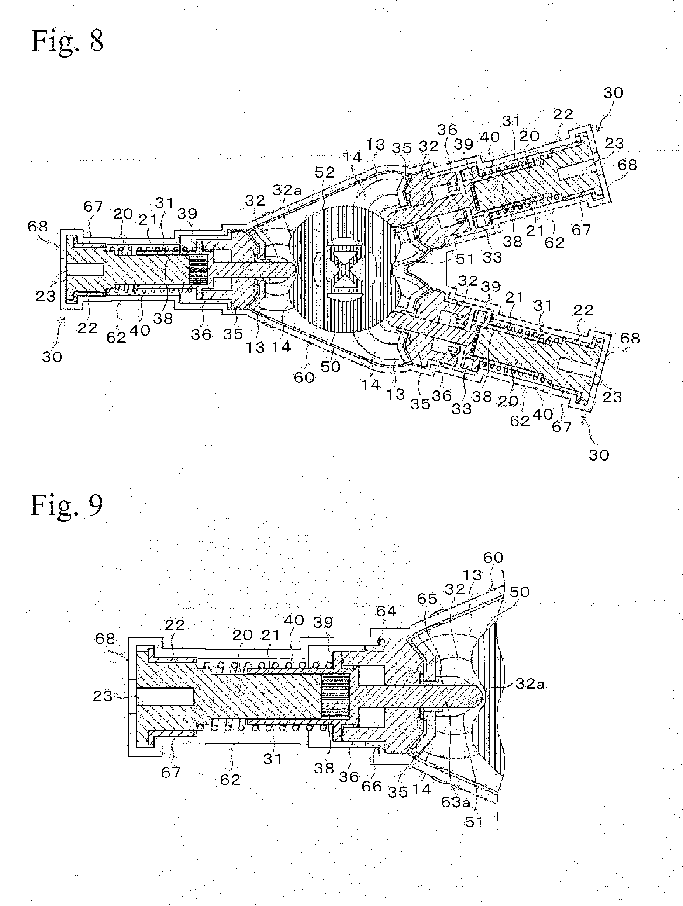

The output shaft 20 is rotatably supported at a back end portion (end portion at a side remote from the dial cam 50) in the gear holder portion 62 via a bearing bush 67. As shown in Figs. 5 and 8, a fitting hole is formed at a center of a back end surface of the output shaft 20. The fit hole has a rectangular cross section, and an end portion of the torque cable is fitted into the fit hole 23.

An outer peripheral spline 21 is formed at a front end side (dial cam 50 side) of the each output shaft 20. Each outer peripheral spline 21 has many grooves and many protrusion stripes which extend in the axial direction and are formed alternately. An inner peripheral spline 38, which is formed on an inner peripheral surface of the connection shaft 31, is provided outside the outer peripheral spline 21 and is spline-connected to the outer peripheral spline 21. That is, the connection shaft 31 is provided to the output shaft 20 so as not to be rotatable relatively to the output shaft 20 and so as to be slidable in an axial direction. A pin 32 is coaxially formed at a front end side of the connection shaft 31 so as to extend toward the dial cam 50. The bevel gear 35 is supported by the pin 32 so as to be relatively rotatable with respect to the pin 32. The output side bevel gear 35 engages with an input side bevel gear 14.

The output side bevel gear 35 is held between a wall portion 63 and a step portion 64 via bearing bushes 65 and 66, thereby being held so as to be restricted in an axial direction movement and constantly engage with bevel gear 14. The wall portion 63 forms a front end portion of the gear holder portion 62. The step portion 64 has a reduced diameter. The wall portion 63 has an umbrella shape, which corresponds to a front end surface of the bevel gear 35, as seen in planar view. The pin 32 of the connection shaft 31 penetrates a center of the bevel gear 35 and the wall portion 63, and projects in the case 60. As shown in Fig. 9, a penetration hole 63a for the pin 32 is formed at the wall portion 63, and the bearing bush 65 is press-fitted into the penetration hole 63a. The pin 32 is slidably inserted into the bearing bush 65.

A flange portion 39 is formed at the connection shaft 31. A coil spring 40 in a compressed condition is provided between the flange portion 39 and a flange portion 22 of a back end portion of the output shaft 20. The connection shaft 31, which is slidable on the output shaft 20, is constantly biased by the coil spring 40 in a front end direction which is directed to the dial cam 50. A back end surface of the output shaft 20 is constantly abutted to a back end wall portion 68 of the gear holder portion 62, and the output shaft 20 is restricted in axial direction movement.

The connection shaft 31 can be moved forward and backward in the axial direction so as to be connectable with respect to the bevel gear 35. Clutch teeth 33 and 36 (connection means, engagement gears) are formed on connection surfaces of the connection shaft 31and the bevel gear 35 which are surfaces facing each other (that is, an end surface of the flange portion 39 of the connection shaft 31 and an end surface of the bevel gear 35). The clutch teeth 33 and 36 engage with each other so as to allow the connection shaft 31and the bevel gear 35 to be connected and rotated together with each other.

A front end portion 32a of the pin 32 of the connection shaft 31, which is biased by the coil spring 40 toward the dial cam 50, faces and constantly elastically abuts an arc-like outer peripheral surface 52 of the dial cam 50. When the front end portion 32a of the pin 32 abuts the outer peripheral surface 52 of the dial cam 50, the pin 32 is pressed by the outer peripheral surface 52 of the dial cam 50 against the coil spring 40. At this time, the connection shaft 31 moves backward and is positioned at a clutch disconnection position apart from the bevel gear 35, so that the connection shaft 31 and the bevel gear 35 are in a disconnected condition.

When the dial cam 50 is rotated and the recess 51 faces the front end portion 32a of the pin 32, the pin 32 of the connection shaft 31, which was pressed by the outer peripheral surface 52 of the dial cam 50, is moved forward to the dial cam 50 by the force of the coil spring 40, the pin 32 enters the recess 51 via the inclined surface, and the pin 32 is positioned at a clutch connection position. At this time, the clutch teeth 33 of the connection shaft 31 engages with the clutch teeth 36 of the bevel gear 35, and the connection shaft 31 and the bevel gear 35 are in a connected condition. By engagement of the clutch teeth 33 and 36, further movement of the connection shaft 31 to the dial cam 50 is inhibited. At this time, the front end portion 32a of the pin 32 does not contact a bottom portion of the recess 51, and is spaced from the bottom portion of the recess 51 to form a small gap between the front end portion 32a and the bottom portion of the recess 51.

The structure of the multiple-shaft drive device of the first embodiment is explained above. In the power transmission mechanism 30 of this device, by the rotation of the dial cam 50, the front end portion 32a of the pin 32 of the connection shaft 31 slides with respect to the output shaft 20 so as to reciprocate between the two positions which are the clutch disconnection position and the clutch connection position. At the clutch disconnection position, the front end portion 32a of the pin 32 of the connection shaft 31 abuts the arc-like outer peripheral surface 52 of the dial cam 50. At the clutch connection position, the front end portion 32a of the pin 32 of the connection shaft 31 enters the recess 51.

In a condition in which the motor 10 is activated and the input side bevel gears 14 is rotated, when the connection shaft 31 is positioned at the clutch disconnection position, as shown by the two power transmission mechanisms 30 at the right sides of Figs. 6 and 8, the flange portions 39 of the connection shafts 31 are separated from the rotated bevel gears 35, the connection shafts 31and the bevel gears 35 are in a disconnected condition, the bevel gears 35 rotates idly around the pins 32, and the output shafts 20 are not rotated. Next, when the dial cam 50 is rotated, as shown by the power transmission mechanism 30 at the left side of Figs. 6 and 8, the front end portion 32a of the pin 32 enters the recess 51 through the inclined surface, and the connection shaft 31 moves forward to the clutch connection position. At this time, the connection shaft 31 is connected to the bevel gear 35 via the clutch teeth 33 and 36, and the connection shaft 31 and the bevel gear 35 are in a connected condition.

The dial cam 50 is rotated in a normal direction and an opposite direction by operating the above operational member in a normal direction and an opposite direction. In this rotation, the pin 32 of the power transmission mechanism 30 enters the recess 51 of the dial cam 50. At this time, the power transmission mechanism 30 is selected, and the connection shaft 31 of the power transmission mechanism 30 is connected to the bevel gear 35.

In this manner, when the transmission mechanism 30 is in a connected condition, the above switch is turned ON, and the motor 10 is activated, so that the power of the motor 10 is transmitted to the output shaft 20 via the bevel gears 14 and 35 and the connection shaft 31, and the output shaft 20 is rotated. Thus, the torque cable, which is connected to the output shaft 20 of the selected power transmission mechanism 30, is rotated and is in action. The rotational direction of the motor 10 is changed by the switch, so that the rotational direction of the torque cable is also changed together with the rotational direction of the output shaft 20.

In the multiple-shaft drive device of the above first embodiment, the bevel gear 35 of the power transmission mechanism 30 is held by the wall portion 63 and the step portion 64 so as to be restricted in axial direction movement and constantly engage with the bevel gear 14. The coil spring 40 is used so as to connect the connection shaft 31 to the bevel gear 35 and integrate them. That is, it is not necessary that the coil spring 40 bias the bevel gear 35 toward the bevel gear 14, and the coil spring 40 only has biasing force for connecting the connection shaft 31 to the bevel gear 35.

Thus, the force of the coil spring 40 can be relatively weak. As a result, countermeasures (strengthening of members to which the force of the coil spring 40 is applied or the like) are not necessary. On the other hand, reduction in thickness and size can be realized, and reduction in weight can be realized. The reduction in the force of the coil spring 40 contributes to reduction in wear amount of bevel gears 14 and 35, and contributes to reduction in cost in accordance with improvement in assembling. The reduction in the force of the coil spring 40 enables inhibition of strange noises.

### [3] Second embodiment

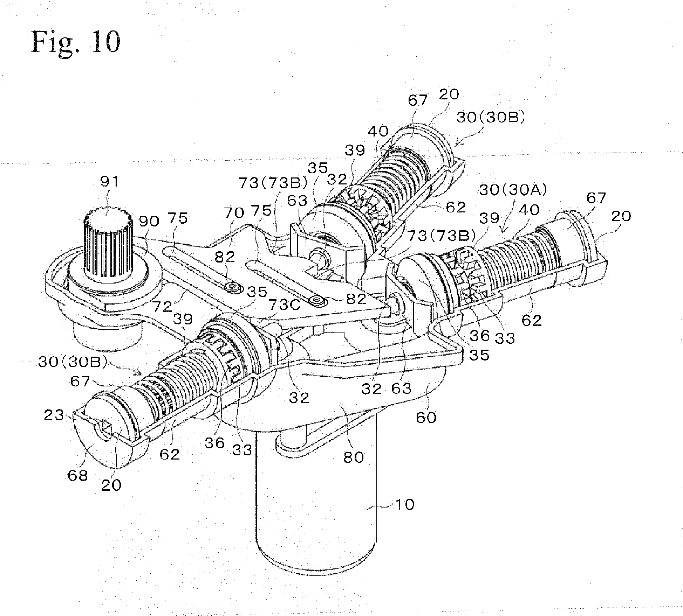

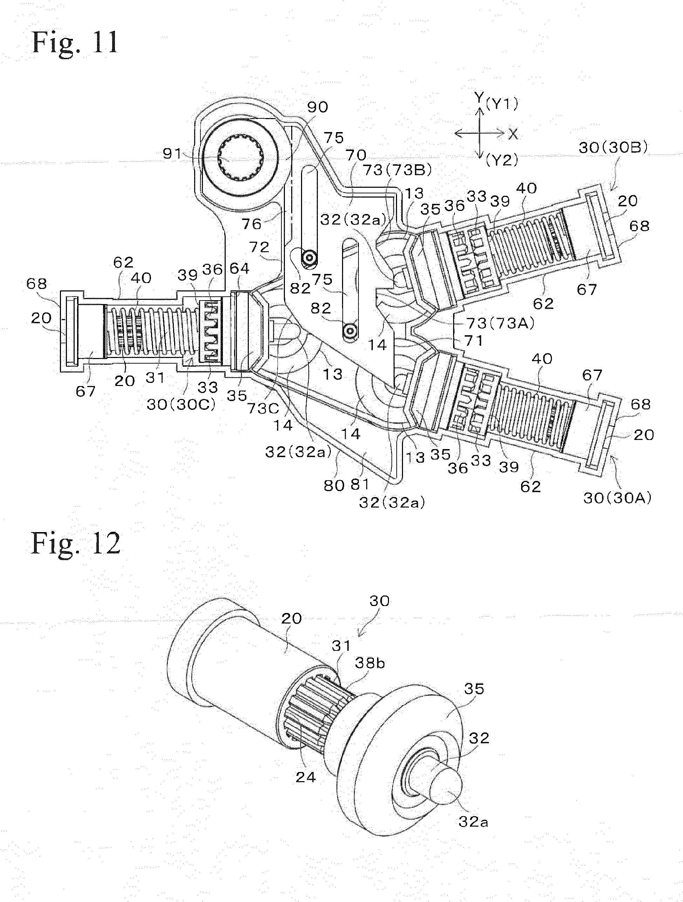

Next, the second embodiment of the present invention will be explained with reference to Figs. 10 and 11.

The multiple-shaft drive device of the second embodiment is different from the first embodiment in using a slide cam 70 (selector member) instead of the dial cam 50 of the first embodiment, and is also different in the shape of the case corresponding to the slide cam 70.

Figs. 10 and 11 are a perspective view and a plan view showing a multiple-shaft drive device of the second embodiment. In Figs. 10 and 11, reference numeral 80 denotes a case fixed at an upper portion of the motor 10, and an opening of the case is covered with a cover (not shown in the Figures). Plural gear holder portions 62 having a split cylindrical shape are formed at side surfaces (side surfaces of both sides of the X direction) of the case 80. In this case, two of the gear holder portions 62 are formed at the right side of Fig. 11 and one of the gear holder portions 62 is formed at the left side of Fig. 11. In each gear holder portion 62, a power transmission mechanism 30 including an output shaft 20, a connection shaft 31, a bevel gear 35, and a coil spring 40 is provided.

The slide cam 70 is a plate-shaped member having an approximate parallelogram shape which is long in the Y direction in Fig. 11. Two guide holes 75 extending in the Y direction 75 are formed at predetermined positions of slide cam 70. A guide projection 82 projecting from a bottom portion 81 of the case 80 is inserted into each of the guide holes 75. The slide cam 70 is guided by each guide projection 82, thereby being slidably supported in the Y direction in Fig. 11.

A side surface at the right side in Fig. 11 of both side surfaces extending in a longitudinal direction of the slide cam 70 is formed on a first cam surface 71. A lower side of a side surface at the left side in Fig. 11 is formed on a second cam surface 72, and a rack 76 having teeth aligned in the Y direction is formed at an upper side thereof. A pinion 90, which is rotatably supported by the case 80, engages with the rack 76. An operational member (dial, lever, or the like, not shown in the Figures) is fixed at the pinion 90 via a rotational shaft 91. The operational member is rotated and the pinion 90 is thereby rotated, so that the slide cam 70 reciprocates in the Y direction via the rack 76 in accordance with the rotational direction of the operational member.

The two power transmission mechanisms 30 are disposed obliquely to the first cam surface 71 of the slide cam 70 so as to face the first cam surface 71, and the one power transmission mechanism 30 is disposed perpendicularly to the second cam surface 72 so as to face the second cam surface 72. In this embodiment, the power transmission mechanisms 30 at the side of the first cam surface 71 are a first power transmission mechanism 30A and a second power transmission mechanism 30B, and the power transmission mechanism 30 at the side of the second cam surface 72 is a third power transmission mechanism 30C.

Recesses 73 (recesses 73A and 73B) corresponding to the first power transmission mechanism 30A and the second power transmission mechanism 30B are formed on the first cam surface 71 of the slide cam 70. A notch 73C corresponding to the third power transmission mechanism 30C is formed at an end portion of the lower side of the second cam surface 72 in Fig. 11.

In each of the power transmission mechanisms 30 (the first power transmission mechanism 30A, the second power transmission mechanism 30B the third power transmission mechanism 30C), a front end portion 32a of a pin 32 of each connection shaft 31 biased by a coil spring 40 faces and elastically abuts the first cam surface 71 and the second cam surface 72. When the front end portion 32a of the pin 32 abuts each of the first cam surface 71 and the second cam surface 72, the pin 32 is pressed by the first cam surface 71 and the second cam surface 72 against the coil spring 40, and the connection shaft 31 moves backward and is separated from a bevel gear 35. In this case, the connection shaft 31 is positioned at a clutch disconnection position, and the connection shaft 31 and the bevel gear 35 are in a disconnected condition.

When the slide cam 70 is operated by the operational member so as to move in the Y direction, the recess 73A, the recess 73B, or the notch 73C faces the front end portion 32a of the pin 32 of the power transmission mechanism 30 corresponding thereto. Thus, the pin 32 pressed by the cam surface 71 of the slide cam 70 enter the recess 73A or the recess 73B, or the pin 32 pressed by the cam surface 72 of the slide cam 70 moves forward along the notch 73C, thereby being in a clutch connection position. At this time, a flange portion 39 of the connection shaft 31 is connected to the bevel gear 35 via clutch teeth 33 and 36, and the connection shaft 31 and the bevel gear 35 are in a connected condition.

More specific actions of the second embodiment will be explained hereinafter.

As shown in Figs. 10 and 11, the operational member is operated, and the slide cam 70 is moved in the Y direction of Fig. 11, so that the pin 32 of the connection shaft 31 of the third power transmission mechanism 30C, which abutted the second cam surface 72, moves forward along the notch 73C. At this time, the clutch teeth 33 of the connection shaft 31 of the third power transmission mechanism 30C is connected to the clutch teeth 36 of the bevel gear 35, and the connection shaft 31 and the bevel gear 35 are in a connected condition. On the other hand, in the other power transmission mechanisms (the first power transmission mechanism 30A and the second power transmission mechanism 30B), the pins 32 are pressed by the first cam surface 71, the connection shafts 31 move backward and are separated from the bevel gears 35, and the connection shafts 31 and the bevel gears 35 are in a disconnected condition.

When the slide cam 70 is moved by a predetermined distance in the Y2 direction (lower side) in Fig. 11 from this condition, the pin 32 of the second power transmission mechanism 30B enters the second recess 73B, and the connection shaft 31 of the second power transmission mechanism 30B is connected to the bevel gear 35. At this time, in the other power transmission mechanisms (the first power transmission mechanism 30A and the third power transmission mechanism 30C), the pins 32 are pressed by the cam surfaces 71 and 72, and the connection shafts 31 of the first power transmission mechanism 30A and the third power transmission mechanism 30C are separated from the bevel gears 35 and are in a disconnected condition.

When the slide cam 70 is further moved by a predetermined distance in the Y2 direction, the pin 32 of the first power transmission mechanism 30A enters the first recess 73A, and the connection shaft 31 of the first power transmission mechanism 30A is connected to the bevel gear 35. At this time, in the other power transmission mechanisms (the second power transmission mechanism 30B and the third power transmission mechanism 30C), the pins 32 are pressed by the cam surfaces 71 and 72, and the connection shafts 31 of the second power transmission mechanism 30B and the third power transmission mechanism 30C are separated from the bevel gears 35 and are in a disconnected condition.

The operational member is operated in a normal direction and an opposite direction, and the slide cam 70 reciprocates in the Y direction. In the reciprocating of the slide cam 70, the pin 32 moves to one of the recesses 73A to 73C. At this time, as described above, the one power transmission mechanism 30 (one of the first power transmission mechanism 30A, the second power transmission mechanism 30B, and the third power transmission mechanism 30C) is selected, the connection shaft 31 of the power transmission mechanism 30 is connected to the bevel gear 35, and the output shaft 20 is rotated.

In this manner, when the transmission mechanism 30 is in a connected condition, the above switch is turned ON, and the motor 10 is activated, so that the power of the motor 10 is transmitted from the bevel gear 35 to the output shaft 20 via the connection shaft 31, and the output shaft 20 is rotated. Thus, the torque cable, which is connected to the output shaft 20 of the selected power transmission mechanism 30, is rotated and is in action. The rotational direction of the motor 10 is changed by the switch, so that the rotational direction of the torque cable is also changed together with the rotational direction of the output shaft 20.

In the second embodiment, the power transmission mechanisms 30 are also radially arranged overall, and the first power transmission mechanism 30A the second power transmission mechanism 30B obliquely face the first cam surface 71. Alternatively, the first power transmission mechanism 30A and the second power transmission mechanism 30B may be arranged parallel to each other so as to be perpendicular to the first cam surface 71. The arrangement of the power transmission mechanisms 30 with respect to the slide cam 70 is freely selected in accordance with arrangement space and other conditions.

### [4] Modification example of power transmission mechanism

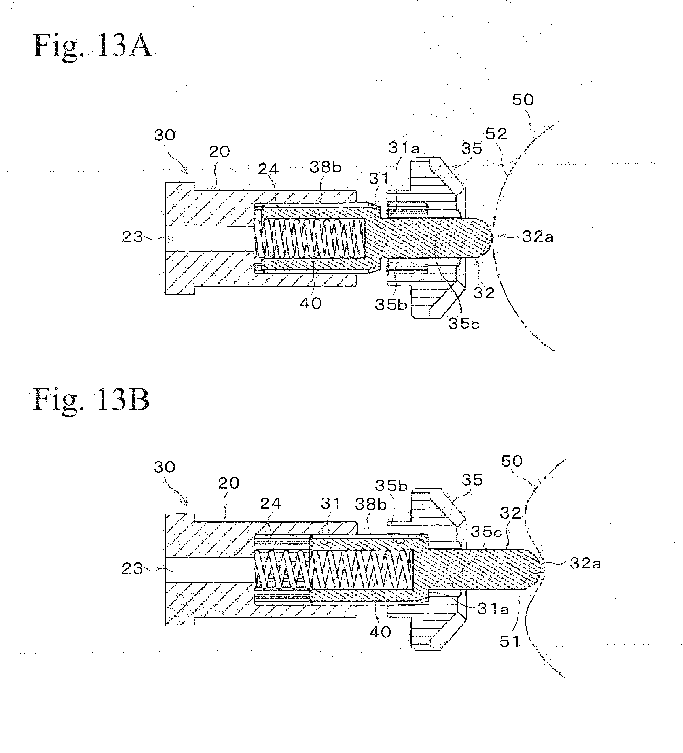

In the above first and second embodiments, although the clutch teeth 33 and 36 are used as the connection means for connecting and disconnecting the connection shaft 31 to the output side bevel gear 35, the connection means can use various features. For example, the power transmission mechanism 30 shown in Figs. 12, 13A, and 13B uses a spline connection feature.

In this power transmission mechanism 30, a front end side (right side in Figs.13A and 13B) of the output shaft 20 has a cylindrical shape, and inner peripheral splines 24 are formed at an inner peripheral surface of the cylindrical shape thereof. Outer peripheral splines 38b are formed at an outer peripheral surface of the connection shaft 31. The outer peripheral splines 38b of the connection shaft 31 are slidably inserted into the inner peripheral splines 24, and are spline-connected thereto.

A front end portion of the connection shaft 31, which has the outer peripheral splines 38b formed thereat, is slidably inserted into the inner peripheral splines 35b, which are formed at a center of the bevel gear 35, and the front end portion thereof can be spline-connected to the inner peripheral splines 35b. A pin 32 of an end portion of the connection shaft 31 slidably penetrates a pin penetration hole 35c which has a diameter smaller than the inner peripheral splines 35b. Front end portions of the outer peripheral splines 38b of the connection shaft 31 are worked to be tapered, thereby being smoothly inserted into the inner peripheral splines 35b of the bevel gear 35. The coil spring 40 in a compressed condition is provided in the output shaft 20 and the connection shaft 31.

For example, instead of power transmission mechanism 30 of the first embodiment, this power transmission mechanism 30 is provided in the gear holder portion 62 of the case 60. In this case, regarding the action, as shown in Fig. 13A, when the outer peripheral surface 52 of the dial cam 50 abuts the front end portion 32a of the pin 32, the pin 32 is pressed toward the output shaft 20 against the coil spring 40. The outer peripheral splines 38b of the connection shaft 31 are ejected and separated from the inner peripheral splines 35b of the bevel gear 35, and the connection shaft 31 is positioned at a clutch disconnection position. At this time, the connection shaft 31 and the bevel gear 35 are in a disconnected condition, the bevel gear 35 rotates idly around the pin 32, and the output shaft 20 is not rotated.

Next, as shown in Fig. 13B, when the recess 51 of the dial cam 50 faces the pin 32, the connection shaft 31 is pressed toward the bevel gear 35 by the force of the coil spring 40, and the connection shaft 31 is positioned at a clutch connection position. At this time, the outer peripheral splines 38b of the connection shaft 31 are inserted into the inner peripheral splines 35b of the bevel gear 35,and are spline-connected thereto, thereby being in a connected condition. At this time, the rotation of the bevel gear 35 is transmitted to the output shaft 20 via the connection shaft 31, and the output shaft 20 is rotated. When the connection shaft 31 moves forward, a step portion 31a, which is connected to the pin 32 of the front end side of the connection shaft 31, abuts the inside of the bevel gear 35, and the connection shaft 31 is restricted in a forward movement position.

### [5] Third embodiment

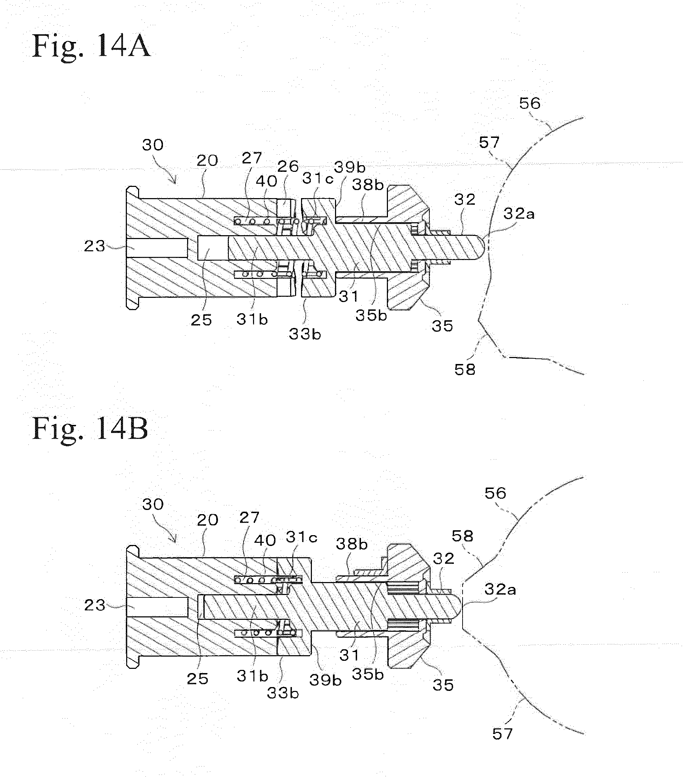

Figs. 14A and 14B show a power transmission mechanism 30 of a third embodiment according to the present invention. In this embodiment, instead of the clutch structure in which the connection member of the present invention, that is, the connection shaft 31 is connected or disconnected to the bevel gear 35, a clutch structure is used in which the connection shaft 31 is connected or disconnected to the output shaft 20.

The connection shaft 31 of the third embodiment has outer peripheral splines 38b, is silidably inserted into inner peripheral splines 35b of the bevel gear 35, and is spline-connected to the bevel gear 35 so as to be rotatable together with the bevel gear 35. A flange portion 39b having a diameter, which is approximately equal to that of the output shaft 20, is formed at an intermediate portion of the connection shaft 31. A shaft portion 31b is slidably inserted into a guide hole 25 formed at a center of the output shaft 20. The connection shaft 31 slides along the bevel gear 35 and the guide hole 25, and the flange portion 39b contact the output shaft 20 or is separated therefrom. Clutch teeth 33b and 26 (connection means, engagement gears) engaging with each other are formed on connection surfaces of the flange portion 39b and the output shaft 20 which are surfaces facing each other.

Ring-shaped grooves 31c and 27 are formed on the surfaces of the flange portion 39b of the connection shaft 31 and the output shaft 20 which face each other. The coil spring 40 in a compressed condition is provided in the grooves 31c and 27. The connection shaft 31 is biased toward the bevel gear 35 by the coil spring 40.

In the third embodiment, a dial cam 56, which has a circular plate shape and has a projection 58 formed at an outer peripheral surface 57, is used as a selector member acting to the pin 32 of the connection shaft 31 Both circumferential direction sides of the projection 58 are formed at inclined surfaces connected to the outer peripheral surface 57. The power transmission mechanism 30 is disposed such that the pin 32 faces the outer peripheral surface 57 of the dial cam 56.

Regarding the action of the third embodiment, when the outer peripheral surface 57 of the dial cam 56 faces the pin 32, as shown in Fig. 14A, the pin 32 is moved forward to the dial cam 56 by the coil spring 40, and the flange portion 39b of the connection shaft 31 is apart from the output shaft 20, thereby being positioned at a clutch disconnection position. In this case, the flange portion 39b abuts the back end surface of the bevel gear 35, so that the front end portion 32a of the pin 32 does not contact the outer peripheral surface 57 of the dial cam 56, and a small is formed between the front end portion 32a and the outer peripheral surface 57. In a case in which the connection shaft 31 is positioned at a clutch disconnection position, even when the input side bevel gear 35 is rotated, the connection shaft 31 is rotated idly together with the bevel gear 35, and the output shaft 20 is not rotated.

Next, when the dial cam 56 is rotated and the projection 58 faces the front end portion 32a of the pin 32, as shown in Fig. 14B, by the projection 58, the pin 32 is moved backward to the output shaft 20 against the coil spring 40, and the connection shaft 31 is positioned at a clutch connection position. At this time, the clutch teeth 33b of the connection shaft 31 engages with the clutch teeth 26 of the output shaft 20, and the connection shaft 31 is connected to the output shaft 20. At this time, the rotation of the bevel gear 35 is transmitted from the connection shaft 31 to the output shaft 20 via the clutch teeth 33b and 26, and the output shaft 20 is rotated.

The power transmission mechanism 30 of the third embodiment is explained above. In this case, the spline connection of the bevel gear 35 to the connection shaft 31 and the clutch teeth 33b and 36 of the connection shaft 31 and the output shaft 20 form a transmission means for transmitting the rotation of the bevel gear 35 to the output shaft 20 via the connection shaft 31.

The above third embodiment uses the feature in which the power transmission mechanism 30 is activated by the projection 58 of the dial cam 56 which is the selector member of the present invention. This feature provides a structure opposite to the feature of the first and the second embodiment in which the power transmission mechanism is activated by the recess which is the selector member (dial cam 50 or slide cam 70).

The present invention is not limited to these embodiments. Insofar as the feature can be realized in which the movement of the input side transmission member (the bevel gear 35) in the axial direction is restricted and connection and disconnection of the clutch can be performed by the movable connection member (connection shaft 31), any embodiments can be used.

## Claims

1. A power transmission mechanism comprising:
an output side transmission member;
an output side transmission member support portion which supports the output side transmission member in a condition in which the output side transmission member is rotatable and is restricted in axial direction movement;
an input side transmission member which is disposed so as to be apart from the output side transmission member in axial direction of the output side transmission member;
an input side transmission member support portion which supports the input side transmission member in a condition in which the input side transmission member is rotatable and is restricted in axial direction movement, and which holds a condition in which the input side transmission member is constantly connected to an input member;
a connection member which is provided between the output side transmission member and the input side transmission member so as to be movable between two positions, which are a clutch connection position and a clutch disconnection position, in the axial direction;
a biasing member which biases the connection member; and
a transmission means which transmits rotation of the input side transmission member to the output side transmission member via the connection member when the connection member is positioned at the clutch connection position.

2. A power transmission mechanism according to claim 1, wherein
the input member and the input side transmission member have bevel gears which engage with each other.

3. A power transmission mechanism according to claim 1 or 2, wherein
the clutch connection position of the connection member is a predetermined position shifted toward the input side transmission member, and
the transmission means is a link means and a connection means, the link means being rotatable together with the output side transmission member of the connection member and movable in an axial direction, the connection means being provided at connection portions of the connection member and the input side transmission member.

4. A power transmission mechanism according to claim 1 or 2, wherein
the clutch connection position of the connection member is a predetermined position shifted toward the output side transmission member, and
the transmission means is a link means and a connection means, the link means being rotatable together with the input side transmission member of the connection member and movable in an axial direction, the connection means being provided at connection portions of the connection member and the output side transmission member.

5. A power transmission mechanism according to one of claims 1 to 4, wherein
the connection means is one of an engagement gear, a frictional plate, and a spline connection.

6. A power transmission mechanism according to one of claims 1 to 5, wherein the power transmission mechanism further comprising:
a selector member which moves the connection member in an axial direction and positions the connection member at one of two positions, which are the clutch connection position and the clutch disconnection position, in cooperation with the biasing member.

7. A multiple-shaft drive device, which transmits power of one motor selectively to plural movable mechanisms by connection or disconnection of clutch, comprising:
a plurality of the power transmission mechanisms according to one of claims 1 to 5.
